Europäisches Patentamt

European Patent Office

Office européen des brevets

(19)

(11) Publication number: 0 376 653
A2

# (12) EUROPEAN PATENT APPLICATION

(21) Application number: 89313523.6

(22) Date of filing: 22.12.89

(51) Int. Cl.5: C08J 3/14, C08J 9/28, C09D 7/12, B05D 1/00, //C08L67/02,C08L69/00, C08L77/00

(30) Priority: 23.12.88 GB 8830072
23.12.88 GB 8830074

(43) Date of publication of application:
04.07.90 Bulletin 90/27

(84) Designated Contracting States:
AT BE CH DE ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Nield, Eric
3 Dell Lees Seer Green
Beaconsfield HP9 2UJ(GB)

(74) Representative: Cooper, Alan Victor et al
Imperial Chemical Industries PLC Legal
Department: Patents P.O. Box 6 Bessemer
Road
Welwyn Garden City Hertfordshire AL7
1HD(GB)

(54) Non-attritive method for making polyester, polycarbonate or polyamide particles, particles obtainable by the method and their use.

(57) A non-attritive method for making fine particles of crystallisable polyester, polycarbonate or polyamide polymers or blends thereof which comprises heating a mixture of the polymer in a moderate solvent for the polymer to a temperature above the melting point of the polymer when in the moderate solvent and then cooling whereupon the particles re-crystalise from the mixture. Also crystalline particles comprising amorphous zones containing entrapped moderate solvent and the use of such particles in coating, in coating compositions and in making porous particles.

EP 0 376 653 A2

## NON-ATTRITIVE METHOD FOR MAKING POLYESTER, POLYCARBONATE OR POLYAMIDE PARTICLES, PARTICLES OBTAINABLE BY THE METHOD AND THEIR USE

This invention relates to a non-attritive method for making distinct fine particles from crystallisable polyester polymers (including copolymers especially with isophthalic acid and rubbery polyesters, for example those incorporating chain segments composed of polyethers having low glass transition temperatures), from crystallisable polycarbonates or from crystallisable polyamide polymers (including copolymers and polyamides modified by the presence of additives for example rubbers or polyolefins to which carboxylic moieties may have been grafted). The invention also relates to novel particles obtainable by the method and to the use of the particles, especially in coating processes and compositions.

Crystallisable polyesters such as polyethylene terephthalate (PET) and polybutylene terephthalate (PBT) are well known thermoplastics. They usually have a density of about 1.4 and 1.3g/cm$^3$ respectively. A fuller description of the various types of polyester is given in Volume 18 of the third edition of Kirk-Othmer's "Encyclopaedia of Chemical Technology" published by John Wiley & Sons of New York in 1982 (see pages 549 to 574) the contents of which are herein incorporated by reference. Most polyesters are partially crystalline as made but a few only become partially crystalline on contact with solvent.

Crystallisable polycarbonates are usually amorphous when first made but become partially crystalline on contact with solvent. They are well known thermoplastics and are more fully described in Volume 18 ibid (see pages 479 to 494) the contents of which are herein incorporated by reference. The most important polycarbonate is Bisphenol A polycarbonate.

Crystallisable polyamides are likewise well known thermoplastics more commonly called nylons. They are usually a partially crystalline to an extent of 30 to 50% as made but a few only become partially crystalline on contact with solvent. A fuller description of the various types of nylon is given in Volume 18 (see pages 406 to 425) the contents of which are herein incorporated by reference. More recently nylon 4, 6 and so called partially crystalline aromatic nylons have become available. Aromatic nylons are polyamides comprising condensates of aromatic diamines such as 1,3-di(aminomethyl) benzene.

The commercial manufacture of polyesters, polycarbonates or polyamides produces pellets which usually have a maximum dimension of at least about 2mm. For some purposes such as powder coating or addition to coating compositions, the pellets need to be converted into distinct fine particles, that is to say particles having a maximum dimension of below 500μm. Hitherto this has been done be attritive methods such as grinding or milling. However attritive methods produce particles of an unpredictable shape which are therefore inconvenient to use in coating processes and compositions and the particles are also totally solid which is sometimes a disadvantage.

An object of this invention is to provide a non-attritive method for making distinct fine particles of partially crystalline polyester, polycarbonate or polyamide polymers. Another object is to provide novel fine particles of a less unpredictable shape which are plasticised or less than totally solid and which are amongst other things especially suitable for use in coating processes and compositions. A further object is to provide a process for coating surfaces in which such novel particles are used.

Accordingly this invention provides a non-attritive method for making distinct particles of partially crystalline polyester, partially crystalline polycarbonate or partially crystalline polyamide polymers or blends thereof (especially blends of polyester and polycarbonate) wherein the method comprises

a) heating a mixture comprising a moderate solvent for the polymer and at least 5 (preferably 10 to 60) wt% of the polymer (the percentage being based on the combined weights of the moderate solvent and the polymer) to a temperature above the crystalline melting point $(T_m)$ of the polymer when in the mixture and preferably to a temperature in the range $T_m + 10°C$ to $T_m + 60°C$ and most preferably to $T_m + 40°C$ and

b) cooling the heated mixture under conditions such that solid/liquid phase separation occurs whereby distinct particles of polymer are produced. Usually the particles have a maximum dimension of from 0.1 to 100μm.

It is essential to use a moderate solvent for if a good solvent is used with the concentrations of polymer employed in the performance of this invention, then the polymer either fails to come out of solution or comes out either as a gel, agglomerate or as particles of unpredictable shape. A "moderate solvent" for the polymer is a solvent which depresses the crystalline melting point $T_m$ of the polymer by not more than 80° (and preferably not more than 60°C) when the polymer constitutes 20 wt % of a mixture of dry moderate solvent and dry polymer. A "dry solvent" for a polycarbonate or a polyester contains less than 0.005 wt % of water and a "dry polycarbonate" or a "dry polyester" is a polycarbonate or polyester which has been heated in a vacuum oven for 16h at 90°C. A "dry solvent" for a polyamide contains less than 0.05 wt% of

2

water and a "dry polyamide" is a polyamide which has been heated in a vacuum oven for 16h at 90°C.

Crystalline melting point is determined by differential scanning calorimetry performed in turn on the crystalline polymer alone and on the appropriate 20 wt% mixture mentioned above. The mixture must be contained in a sealed capsule to prevent loss of the moderate solvent during heating. More particularly, 10mg of polymer alone and 10mg of the appropriate mixture are each in turn subjected to heating cycles performed under nitrogen in the calorimeter. Each heating/cooling cycle comprises heating the sample under test (which may be polyester of polyamide alone or a mixture) at a rate of 20°C/min to cause crystalline melting which occurs at a temperature $T_m$, subsequently holding the sample for two minutes at a holding temperature $T_h$ which is above $T_m$, then cooling at a rate of 20°C/min to cause recrystallisation which occurs at a temperature $T_c$ and finally continuing cooling to a temperature of at least 10°C below $T_c$. $T_m$ and $T_c$ are detected respectively as an endothermic trough and an exothermic peak in the graph of heat absorbed or evolved versus temperature. Each cycle is repeated to discover whether a consistent value for $T_c$ can be obtained. If consistency is not obtained, another pair of heating cycles are performed using a slightly higher $T_h$. Further pairs of cycles with gradually increasing $T_h$ are performed until consistent values for $T_c$ are achieved whereupon the pair of cycles which gave consistent values is repeated and the value for $T_m$ obtained is defined to be the crystalline melting point of the sample under test. As indicated earlier, commercially available polycarbonates and some polyesters and polyamides are amorphous and so they must first be converted to their partially crystalline form. This can be done by dissolving them in hot moderate solvent and then allowing the solution to cool whereupon partially crystalline polymer separates out.

A good solvent for PET such as orthochlorophenol depresses the melting point by well in excess of 80°C whereas moderate solvents such as dimethyl phthalate or diethyl phthalate depress the melting point by only 42°C and 26°C respectively. Dimethyl phthalate is a particularly preferred moderate solvent for use with PET in the method of this invention. Other moderate solvents for PET include diethyl phthalate, dibutyl phthalate or mixtures thereof and mixtures of the dimethyl esters of adipic, glutaric and succinic acids which have a boiling point in the range of 196 to 225°C at 1 bar. Mixture of dibutyl phthalate and dioctyl phthalate are especially useful with PBT.

Good solvents for polycarbonates include $C_1$ to $C_4$ dialkyl phthalates and diphenyl ether.

A good solvent for nylon 6 such as phenol depresses the melting point by well in excess of 80°C whereas moderate solvents for nylon 6 such as ethylene glycol, diethylene glycol, triethylene glycol or tetreathylene glycol depress the melting point by only 79°, 46°C, 48° and 1°C respectively. Tetraethylene glycol is a particularly preferred moderate solvent for use with polyamides in the method of this invention. Other moderates solvents for polyamides include benzyl alcohol, propylene glycol and glycerol.

It is also important when performing the method of this invention that the mixture be heated to above the crystalline melting point of the polymer when in the mixture ($T_m$) for otherwise there will be obtained particles of unpredictable shape comprising some undissolved polymer and some re-crystallised polymer agglomerated into the undissolved polymer. Preferably the mixture should be heated at least to its clearing temperature, "$T_{cl}$". The "clearing temperature" ($T_{cl}$) of any chosen mixture comprising dry moderate solvent and dried polymer is the temperature at which the appearance of the mixture becomes clear to the unaided eye. $T_{cl}$ is determined by heating 2g of a chosen mixture until the polymer dissolves and the initially turbid solution obtained turns clear for a first time, then cooling the mixture to room temperature an finally re-heating the mixture until it turns clear for the second time. The temperature at which it turns clear for the second time is defined to be $T_{cl}$ for that mixture. Heating to $T_{cl}$ and above (preferably to 10 to 30°C above $T_{cl}$) leads to the formation of more uniform particle sizes. Uniformity of particle size is also enhanced by heating the mixture to a holding temperature $T_h$ which is above $T_m$ for the polymer when in the mixture (and preferably 10 to 60°C above) and holding the mixture at temperature $T_h$ for from 1 to 30 minutes although holding for 1 to 5 minutes is usually sufficient.

It has been found that some large pellets of polyesters of polyamides available commercially can be inconveniently slow to dissolve. Where time saving is important, this problem can be alleviated by using a pre-heating and pre-cooling cycle as follows. The mixture is first pre-heated to a temperature about the melting point of the pure polymer for example to 250°C. Such pre-heating causes a rapid dissolution of the polymer. The mixture is then pre-cooled to at least a temperature (for example 30 to 80°C below the melting point of the pure polymer or lower) at which polymer re-solidifies from the mixture. Such re-solidification produces polymer in a form which dissolves quickly (usually within 2 minutes) on heating to $T_{cl}$ or above so producing a mixture consisting of a solution of polymer in moderate solvent which appears clear to the unaided eye.

In performing the process of this invention it is essential to employ conditions which cause solid/liquid phase separation to occur from the mixture when it is in its solution state for otherwise an agglomerated

EP 0 376 653 A2

mass will be obtained. To achieve solid/liquid phase separation, it is necessary to use a moderate solvent, to use a mixture containing at least 5 wt% of polymer and to avoid shock cooling which usually means cooling at a rate of no faster than 300°C/min. The preferred cooling rates are from 10°C/min to 50°C/min.

This invention also provides distinct fine particles of partially crystalline polyester or polyamide polymers wherein the particles are partially plasticised in that they comprise zones of amorphous polymer containing entrapped moderate solvent. Generally the particles will comprise from 10 to 90 (preferably from 40 to 75) wt% of entrapped moderate solvent. Usually large proportions of entrapped solvent and amorphous polymer are favoured by performing the method of this invention using high cooling rates (say 100 to 300°C/min). This particles are obtainable by the method of this invention as a slurry or paste in moderate solvent. Alternatively the particles can be obtained in a free flowable condition by removal of the solvent external of the particles by for example rinsing with a liquid miscible with the moderate solvent but which does not dissolve the polymer. Methanol, ethanol and aliphatic ketones are examples of such liquids suitable for use with polyesters and methanol, ethanol and water are suitable for use with polyamides.

The size of the particles can be adjusted by by varying the cooling rates employed in the method or by incorporating nucleating agents into the polymers. In general higher cooling rates and also nucleating agents favour smaller particles sizes. Typical nucleating agents for polyesters include talc, sodium benzoate or the ionomeric copolymers of ethylene with minor amounts of carboxylate comonomers, for example those known as "Surlyn" A available from El Dupont de Nemours Inc. Sodium benzoate is a useful nucleating agent for polycarbonates. Typical nucleating agents for nylons include talc, fluorspar and those disclosed in British patent specification GB 1 465 046 the contents of which are herein incorporated by reference. The uniformity of particle size increases as the temperature to which the mixture is heated is increased up to $T_m + 60°C$. No advantage is generally gained by using temperature above $T_m + 60°C$ and of course temperatures high enough to cause thermal degradation of the polyester should be avoided. Use of nucleating agents also improves uniformity of particle size.

The presence of a nucleating agent may cause a residual turbidity to persist at $T_{cl}$. However the skilled eye is able to distinguish between turbidity caused by the polyester and that caused by a nucleating agent and so determination of $T_{cl}$ and clearing are not unduly hindered.

The shape of the particles obtained varies with the concentration of polymer in the mixture. Lower concentrations favour flaky or rod-like particles whilst higher concentrations favour approximately spherical or oblate particles. Usually concentrations of at least 20 wt % should be used to obtain spherical or oblate particles with the best results being obtained with concentrations above 30 wt %.

It has been discovered that the presence of entrapped moderate solvent in the particles of this invention enhances their ability to dissolve, flow or coalesce when heated so as to provide a continuous layer of polymer. Accordingly this invention also provides a process for coating a surface with polyester, polycarbonate or polyamide blends thereof which process comprises

a) providing (usually evenly) across the surface a covering of particles of partially crystalline polyester, polycarbonate or polyamide or blends thereof and

b) heating the covering to produce a coherent coating on the surface wherein the particles employed are partially plasticised in that they comprise amorphous zones containing entrapped moderate solvent. Heating of the covering may or may not dissolve the particles (dissolution being facilitated by the presence of the entrapped solvnet) but in any event heating will eventually remove volatile liquid whereupon the coherent coating is produced either by deposition of dissolved polymer or coalescence of undissolved particles or both. Preferably the particles are applied to the surface as a dispersion of usually 5 to 35 (especially 10 to 25) wt % of particles in either moderate solvent or a liquid which is not a solvent for the polymer, for example acetone or methyl ethyl ketone for polyesters or methanol, ethanol or water for polyamides. Coating may be further facilitated by adding to the dispersion an auxiliary solvent which has a high boiling point at 1 bar absolute and which has no significant dissolving effect on the polymer at ambient temperatures. Preferably the boiling point of the auxiliary solvent should be sufficiently higher (preferably at least 100°C higher) than that of the moderate solvent to ensure that during performance of the coating process, the auxiliary solvent either facilitates dissolution of the particles or alternatively remains in contact with the particles for a short period of time after the moderate solvent has been removed by volatilisation so as to promote improved cohesion of the particles. Preferably up to 25 wt% (based on the combined weight of polymer and moderate solvent) of auxiliary solvent is used. Preferably the particles are heated to a a temperature of from 200 to 240°C for a period of from 2 to 30 minutes. The surfaces may be metal, for example aluminium or stainless steel or non-metallic, for example glass, wood, paper or textile. In particular the particles may be used to coat sheets (especially sheets which are to be used in shaping processes), and shaped articles such as cans. The particles may be used in conventional powder coating operations. The particles may be used to impregnate continuous rovings of a wide variety of fibres including glass and

4

carbon fibres. If the impregnated fibres are heated to soften or melt the particles, they may be compressed to produce a composite which on cooling comprises fibre consolidated in polyester, polycarbonate or polyamide.

It also has been found that the particles according to this invention disperse well in coating compositions (for example paints and varnishes) based on organic solvents. Accordingly this invention provides a coating composition based on (a preferably organic) solvent and comprising a binder of a type used in coating compositions and (preferably from 0.5 to 50 wt% of) particles of partially cystalline polyester, polycarbonate or polyamide polymer wherein the particles of polymer are partially plasticised in that they comprise zones of amorphous polymer containing entrapped moderate solvent. Typical binders for coating compositions are described in the third edition of the book "Introduction to Paint Chemistry and Principles of Paint Technology" by G P A Turner and published by Chapman and Hall of London in 1988, the contents of which are herein incorporated by reference. The coating composition may also comprise pigments and extenders and other conventional ingredients described in the above book.

Particles made according to the method of this invention may be converted to porous particles by extraction of the entrapped moderate solvent. Accordingly this invention provides a process for making porous particles of partially crystalline polyester, polycarbonate or polyamide polymers which are partially plasticised in that they comprise zone of amorphous polymer containing entrapped moderate solvent wherein the process comprises

a) immersing the particles in a liquid extractant but which is miscible with the moderate solvent but which is not a solvent for the partially crystalline polymer,

b) allowing the extractant to extract the moderate solvent from the particles and

c) washing the extractant from the particles. Particles having small pores can be obtained by using an extractant which only extracts the moderate solvent. Examples of such extractants for use with polyesters include acetone, methyl ethyl ketone or petroleum ether and examples of extractants for use with polyamides include methanol, ethanol and water. Porous particles may be used to increase the opacity of coatings obtained by applying the coating compositions or they may be applied to surfaces by conventional powder coating techniques or by electrostatic spraying.

The invention is further illustrated by the following Examples. In all cases where polyester is used, the moderate solvent used had been dried to reduce its water content to not more than 0.005 wt % and the polyester has been dried by heating it in a vacuum (1m bar) oven for 16h at 90° C. In all cases where polyamide is used, the moderate solvent used had been dried over molecular sieves to reduce its water content to not more than 0.05 wt% and the polyamide had been dried by heating it in a vacuum (1m bar) for 16h at 90° C.

EXAMPLES 1 TO 17

Making PET Particles:

10 g of various mixtures of a polyethylene terephthate as specified in Table 1 were pre-heated in a test tube to a temperature $T_h$ also specified in Table 1 and then allowed to cool to room temperature (20° C). This pre-heating step helped to obtain more uniform results. The PET had an intrinsic viscosity of 0.64 to 0.66 in othochlorophenol at 25° C.

10mg samples of each of the pre-heated mixtures were heated at a rate of 20° C/min to a holding temperature $T_h$ (see Table 1) which was above the crystalline melting point ($T_m$) of the PET when in the mixture and also above the clearing temperature $T_{cl}$ of the mixture so as to dissolve the PET so that the mixture existed as a solution. $T_m$ for each mixture are also given in Table 1. The mixture was held at $T_h$ for 2 minutes and then cooled to room temperature again at a rate of 20° C/min. A solid/liquid phase separation and re-crystallisation occurred producing fine, distinct and approximately spherical particles comprising crystalline zones and amorphous zones containing entrapped solvent. A typical dimension of the particles (as determined by scanning electron microscopy) is shown in Table 1. The particles comprises about 50 wt% of entrapped solvent and were obtained as a paste consisting of particles and moderate solvent.

The pastes obtained could be converted to dry free flowing particles by rinsing with acetone. Rinsing amounted to placing the paste on filter paper in a funnel and pouring acetone through for 30 seconds at room temperature.

5

EP 0 376 653 A2

TABLE 1

| Eg | Solvent | Amount PET in Mixture, wt % | $T_m$ °C | $T_h$ °C | Typical Particle Dimension $\mu m$ |
|---|---|---|---|---|---|
| 1 | dimethyl phthalate | 10 | 192 | 230 | 2 |
| 2 | dimethyl phthalate | 20 | 201 | 230 | 20 |
| 3 | dimethyl phthalate | 30 | 193 | 230 | 25 |
| 4 | dimethyl phthalate | 40 | 210 | 230 | 25 |
| 5 | dimethyl phthalate | 50 | 217 | 230 | 25 |
| 6 | diethyl phthalate | 10 | 214 | 240 | 2 |
| 7 | diethyl phthalate | 20 | 217 | | 3 |
| 8 | diethyl phthalate | 30 | 213 | | 20 |
| 9 | diethyl phthalate | 40 | 225 | | 20 |
| 10 | diethyl phthalate | 50 | 226 | | 30 |
| 11 | dibutyl phthalate | 20 | 236 | | 25 |
| 12 | dibutyl phthalate | 30 | 232 | | 15 |
| 13 | dibutyl phthalate | 40 | 234 | | 20 |
| 14 | dibutyl phthalate | 50 | 238 | | 20 |
| 15 | mixture of 90% diethyl phthalate mixed with 10 wt% of tetraisobutylene sold by BP Chemicals Ltd as TIB 90 | 10 | 215 | | 2 |
| 16 | mixture of 90% diethyl phthalate mixed with 10 wt% of tetraisobutylene sold by BP Chemicals Ltd as TIB 90 | 20 | 219 | | 10 |
| 17 | mixture of 90% diethyl phthalate mixed with 10 wt% of tetraisobutylene sold by BP Chemicals Ltd as TIB 90 | 30 | 217 | | 15 |

EXAMPLES 18 TO 23

Making PBT Particles:

10g samples of a polybutylene terephthalate (PBT) pellets available as "Celanex" 2002-2 from the Celanese Company were ground and then each mixed with one of various moderate solvents as specified in Table 2 in amounts also specified in Table 2. Each mixture was heated to a temperature above the crystalline melting point of the PBT when in the mixture and to above the clearing temperature $T_{cl}$ for the mixture so as to dissolve the PBT whereupon the mixture existed as a solution. The clearing temperature $(T_{cl})$ for each mixture is given in Table 2. The mixture was held at this temperature for 2 minutes and then allowed to cool to room temperature. A solid/liquid phase separation and re-crystallisation occurred producing fine, distinct and approximately spherical partially plasticised particles comprising crystalline zones

6

TABLE 2

| Example | Solvent | Amount PBT in Mixture, wt % | $T_{cl}$ °C | Typical Particle Dimension $\mu$m |
|---|---|---|---|---|
| 18 | dimethyl phthalate | 20 | 211 | 18 |
| 19 | dimethyl phthalate | 40 | 230 | 12 |
| 20 | diethyl phthalate | 10 | 216 | 2 |
| 21 | diethyl phthalate | 20 | 230 | 13 |
| 22 | dibutyl phthalate | 20 | 231 | 10 |
| 23 | dibutyl phthalate | 40 | 241 | 12 |

and amorphous zones containing entrapped solvent. A typical dimension of the particles is shown in Table 2. The particles comprises about 50 wt % of imbibed solvent and were obtained as a paste consisting of particles and moderate solvent.

The pastes obtained can be converted to dry free flowing particles by rinsing with acetone using the procedure employed in Examples 1 to 17.

EXAMPLES 24 TO 26

Making PBT Elastomer Particles:

Quantities of PBT elastomer containing segments of polytetramethylene oxide available as "Hytrel" 72456 from El Dupont de Nemours Inc were mixed with one of various moderate solvents as specified in Table 3 in amounts sufficient to provide a mixture containing 20 wt% "Hytrel". 10g of each mixture was heated to a temperature of 10° C above its clearing temperature to dissolve the "Hytrel" so that the mixture existed as a solution. The clearing temperature for each mixture is given in Table 3. The mixture was held at this temperature for 2 minutes and then allowed to cool to room temperature again. A solid/liquid phase separation and re-crystallisation occurred producing fine, distinct and approximately spherical partially plasticised particles comprising crystalline zones

TABLE 3

| Example | Solvent | $T_{cl}$ °C | Particle Dimension $\mu$m |
|---|---|---|---|
| 24 | *dimethyl ester mixture | 90 | 20 |
| 25 | propylene carbonate | 90 | 15 |
| 26 | mixture of 90 wt% diethyl phthalate with 10 wt% TIB90 as used in Example 15 | 90 | 20 |

* Mixture of dimethyl esters of adipic, glutaric and succinic acids having a boiling point in the range 196 to 225° C.

EP 0 376 653 A2

and amorphous zones containing entrapped solvent. An estimate of the number average dimension of the particles as determined by optical microscope is shown in Table 3. The particles comprises about 50 wt % of entrapped solvent and were obtained as a paste consisting of particles and moderate solvent.

The pastes obtained were suitable for conversion to dry free flowable particles by rinsing with acetone as in Examples 1 to 17.


## EXAMPLES 27 TO 29


Use of Nucleated PET to obtain Finer Particles:

10g samples of a PET containing a proprietry nucleating agent and available as "Melinar" Tl00X from Imperial Chemical Industries PLC were each mixed with a moderate solvent which was dimethyl phthalate in amounts specified in Table 4. Each mixture was heated to a temperature which was above the crystalline melting point $(T_m)$ for the PET when in the mixture and was $10\degree$C above the clearing temperature of the PET/solvent mixture so as to dissolve the PET whereupon the mixture existed as a solution. The clearing temperature for each mixture is given in Table 4. The mixture was held at this temperature for 2 minutes and then allowed to cool to room temperature. A solid/liquid phase separation and re-crystallisation occurred producing fine, distinct and approximately spherical partially plasticised particles comprising crystalline zones

### TABLE 4

| Example | Amount Nucl. PET in Mixture, wt % | $T_{cl}\degree$C of PET/solvent mix |
|---------|-----------------------------------|-------------------------------------|
| 27 | 10 | 190 |
| 28 | 15 | 190 |
| 29 | 20 | 195 |

and amorphous zones containing entrapped solvent. The particles comprised about 50 wt % of entrapped solvent and were obtained as a paste consisting of particles and moderate solvent. In all cases the particles were not visible at 400 times magnification using an optical microscope and hence it was concluded that their particle size was below 1$\mu$m.


## EXAMPLES 30 TO 33


Comparison of Rinsing and Extraction:

These examples illustrate how merely rinsing particles of PET or PBT (Examples 33 and 34) as compared with rinsing followed by extraction to remove the moderate solvent Examples 32 and 33) affect the ability of the PET or PBT particles to flow and coalesce.

A paste of PET (for use in Examples 30 and 32) made according to Example 7 and a paste of PBT (for use in Example 33 and 34) made according to Example 21 were each rinsed twice in fresh 40/60 petroleum ether to do no more than remove the moderate solvent which was external of the particles. This produced which after drying were free flowable. Rinsing amounted to placing the paste on filter paper in a funnel and pouring 40/60 petroleum ether through the particles for 30 seconds allowing the ether to drain from the particles and then again pouring ether through the particles for 30 seconds.

The free flowing particles of PET and PBT were each divided into two equal portions and one portion of each was subjected to an extraction treatment to remove entrapped solvents. Extraction was performed by refluxing the particles in 40/60 petroleum ether for 3h.

The rinsed only portions (Examples 30 (PET) and 32 (PBT) and the rinsed plus extracted portions (Examples 31 (PET) and 36 (PBT)) were each mixed with dry "Isopar" L to produce pasty dispersions suitable for use in coating. "Isopar L" is a mixture of isoparaffins having a boiling point of from 190 to 210°C and available from Esso Chemicals Ltd. Each dispersion was applied to flat smooth sheets of aluminium and glass using a grooved doctor bar comprising parallel grooves 300μm deep space 4.5mm apart so that the applied dispersion was in the form of a plurality of ridges extending across the sheet. The sheets were placed in an oven and heated to 260°C for 3 minutes and then allowed to cool to room temperature.

It was found that Examples 30 and 32 (rinsed only) produced continuous smooth glossy coatings of PET or PBT whereas the PET or PBT of Examples 31 and 33 (rinsed plus extracted) remained substantially in the ridges and did not flow to produce a continuous covering. Clearly the presence of entrapped moderate solvent in the particles enhances their usefulness as melt-coating materials.

## EXAMPLES 34, 35 AND COMPARATIVE EXAMPLE A

Quantitative Assessment of Flowability of PBT Particles:

The flowability of rinsed only PBT particles made according to Example 32, and of rinsed and extracted PBT particles made according to Example 36 and ov conventional group PBT obtainable as "Valox" from G E Plastics Inc was assessed as follows:

A quantity of each type of particle was compressed into a self-supporting cylinder by ramming the particles into an open-ended glass tube of an internal diameter which gives the cylinder widths shown in Table 5. Equal weights of each particles were used to create a cylinder 2.8mm high. The cylinder of particles was pushed out of the glass tube and heated to a temperature $T_x$ (as shown in Table 5) at which the particles were seen to melt. They were held at that temperature for 3 minutes. The increase in width of the cylinder was measured and is also shown in Table 5 from which it will be seen that the rinsed only particles flowed considerably better than the others whilst the rinsed and extracted particles flowed marginally less well than the ground particles:

TABLE 5

| Eg | Particle Type | Initial Cylinder width mm | Final Cylinder width mm | % Increase | $T_x$ °C |
|---|---|---|---|---|---|
| 34 | Rinsed only | 3.2 | 4.8 | 50 | 220 |
| 35 | Rinsed & Extracted | 3.0 | 3.7 | 23 | 245 |
| A | Ground | 2.7 | 3.0 | 11 | 245 |

## EXAMPLE 36

Paint Formulation:

A copolymer consisting of 82 wt% polyethylene terephthalate and 18 wt% isophthalic acid and having an intrinsic viscosity in orthochlorophenol at 25°C of 0.63 to 0.65 was mixed with the dimethyl ester mixture used in Example 24 to produce a mixture containing 20 wt% of the copolymer. The copolymer was then heated to 180°C (which is above $T_m$ for the mixture) and then allowed to cool to room temperature. During cooling, solid/liquid phase separation and re-crystallisation occurred resulting in the formation of a paste comprising approximately spherical partially plasticised particles comprising crystalline zones and amorphous zones containing entrapped solvent.

The paste was then dispersed in further dimethyl ester solvent and diluted with methyl ethyl ketone dispersion containing 10 wt% of particles. The dispersion was painted onto the surface of a smooth flat aluminium and then heated to 235°C for two minutes, then to 220°C for two minutes and then to 200°C for two minutes. A smooth glossy continuous coating was formed which adhered well to the aluminium sheet.


EXAMPLES 37 to 48


Making polyamide Particles:

Samples of a nylon 6 polyamide available as "Maranyl" B3 fro Imperial Chemical Industries PLC were each mixed with one of various moderate solvents as specified in Table 6 in amounts also specified in Table 6. Each mixture was pre-heated in a test tube to a temperature about 20°C above $T_h$ also specified in Table 6 and then allowed to cool to room temperature (20°C). This pre-heating step helped to obtain more uniform results.

10mg of each cooled pre-heated mixture was heated at a rate of 20°C/min to a holding temperature $T_h$ (see Table 1) which was above the crystalline melting point of the polyamide when in the mixture ($T_m$) and above the clearing temperature $T_{cl}$ of the mixture so as to dissolve the nylon so that the mixture existed as a solution. $T_m$ for each mixture and a representative range of $T_{cl}$ are given in Table 6. The mixture was held at this $T_h$ for 2 minutes and then cooled to room temperature again at a rate of 20°C/min. A solid/liquid phase separation and re-crystallisation occurred producing fine, distinct and approximately spherical partially plasticised particles comprising crystalline zones

TABLE 6

| Eg | Solvent | Amount Nylon 6 in Mixture, wt % | $T_m$ °C | $T_{cl}$ °C | $T_h$ °C | Typical Particle Dimension m |
|---|---|---|---|---|---|---|
| 37 | ethylene glycol | 20 | 141 | - | 220 | 25 |
| 38 | ethylene glycol | 30 | 143 | 140 | 170 | 20 |
| 39 | ethylene glycol | 40 | 146 | - | 180 | 25 |
| 40 | diethylene glycol | 20 | 174 | - | 195 | 25 |
| 41 | diethylene glycol | 30 | 170 | - | 190 | 25 |
| 42 | diethylene glycol | 40 | 161 | 190 | 200 | 40 |
| 43 | triethylene glycol | 20 | 172 | 185 | 210 | 30 |
| 44 | triethylene glycol | 30 | 158 | 185 | 185 | 30 |
| 45 | triethylene glycol | 40 | 193 | - | 200 | 25 |
| 46 | tetraethylene glycol | 20 | 219 | - | 250 | 30 |
| 47 | tetraethylene glycol | 30 | 217 | - | 230 | 50 |
| 48 | tetraethylene glycol | 40 | 187 | - | 245 | 35 |

and amorphous zones containing entrapped solvent. A typical dimension of the particles as determined by scanning electron microscopy is shown in Table 6. The particles comprises about 50 wt% of entrapped solvent and were obtained as a paste consisting of particles and moderate solvent.

The pastes obtained could be converted to dry free flowing particles by rinsing the acetone. Rinsing amounted to placing the paste on filter paper in a funnel and pouring acetone through for 30 seconds at room temperature.


EXAMPLES 49 AND 50


Comparison of Rinsing and Extraction:

These Examples illustrate how rinsing alone (Example 49) and rinsing plus extraction (Example 50) to remove the moderate solvent affect the ability of the particles to flow and coalesce.

A paste of nylon 6 made according to Example 43 was rinsed first in water and then in methanol to remove the moderate solvent which was external of the particles so as to produce particles which after drying were free flowable. Rinsing amounted to placing the paste on filter paper in a funnel and pouring water through the particles for 1 minute followed by methanol for 0.5 minute.

The free flowable particles obtained above were divided into two equal portions and the first portion was subjected to an extraction treatment to remove entrapped solvent. Extraction was performed by refluxing the particles in methanol for 3h.

The rinsed only portion (Example 49), and the rinsed plus extracted portion (Example 50) were each mixed with just sufficient water to produce pasty dispersions suitable for use in coating. Each dispersion was applied to a flat smooth sheet of aluminium using a grooved doctor bar comprising parallel grooves 300μm deep spaced 4.5mm apart so that the applied dispersion was in the form of a plurality of ridges extending across the sheet. The sheets were placed in an oven and heated to 290°C for 3 minutes and then allowed to cool to room temperature.

It was found that the rinsed only portion (Example 49) produced a continuous smooth and glossy coating of nylon whereas the rinsed plus extracted portion (Example 50) remained substantially in the ridges and did not flow to produce a continuous covering. Clearly the presence of entrapped moderate solvent in the particles enhances their usefulness as melt-coating materials.


EXAMPLES 51 TO 54


Other Nylons:

10g of various nylons as specified in Table 7 were each mixed with triethylene glycol to produce mixtures containing 20 wt% of the polyamide or 30 wt% in the case of the nucleated nylon. Each mixture was pre-heated to 250°C and allowed to pre-cool to room temperature to convert the nylons to a form which could be relied on to dissolve quickly and then they were heated to about 5°C above the crystalline melting point of the nylon when in the mixture or in the case of the nucleated nylon, to about 40°C above that melting point. The mixtures were then allowed to cool to room temperature. Cooling caused solid/liquid phase separation and re-crystallisation resulting in the formation of fine, distinct approximately spherical partially plasticised particles comprising crystalline zones and amorphous zones containing entrapped moderate solvent. The particles comprised about 50 wt% of entrapped solvent and had typical dimension (as determined by optical microscope) as shown in Table 7.

TABLE 7

| Example | Nylon Type | *RV | Typical Particle Size μm |
|---------|------------|-----|--------------------------|
| 51 | Nylon 6,6 | 44 to 50 | 30 |
| 52 | Copolymer of 97 wt% Nylon 6,6 with 3 wt% Nylon 6 | 4 to 50 | 30 |
| 53 | Copolymer of 90 wt% Nylon 6, 6 with 10 wt% Nylon 6 | 44 to 50 | 25 to 30 |
| 54 | Nucleated Nylon 66 | 44 to 50 | 30 |

* RV is Relative Viscosity of the nylon determined at 25°C on a solution consisting of 11g of the nylon in 100ml of an aqueous solution of formic acid consisting of 90 wt% formic acid and 10 wt% water.


EXAMPLES 55 AND 56

Coating Other Surfaces:

A paste obtained according to Example 52 was spread across the flat surfaces of a sheet of stainless steel (Example 55) and glass (Example 56) using the doctoring bar employed in Examples 49 and 50. The sheets were then heated in an oven to 220°C for a period of 5 mins. On removal from the oven, the particles were found to have coalesced into a smooth continuous layer of nylon which was tough and glossy and bonded firmly to the surface of the sheet.

EXAMPLES 57 TO 60

Making Polycarbonate Particles:

Samples of amorphous bishpenol A polycarbonte available as "Sinvet" 251 from ENI Chem were each mixed with various moderate solvents as specified in Table 8 to produce a mixture consisting of 40 wt% polycarbonate and 60 wt% moderate solvent. Each mixture was pre-heated in a test tube to a temperature Tp specified in Table 8 to dissolve the polycarbonate. The solution obtained was then allowed to cool to room temperature (20°C) whereupon the polycarbonate separted out developing a partially crystalline structure and assumed the form of a paste of fine particles. This pre-heating operation was repeated once. Pre-heating helps to obtain more uniform results.

4mg of each cooled pre-heated mixture was then heated at a rate of 20°C/min to a holding temperature Th which was above the crystalline melting point of the polycarbonate when in the mixture (Tm) and also above the clearing temperature Tcl of the mixture so as to dissolve the polycarbonate so that the mixture existed as as solution. Tm for each mixture is given in Table 8. The mixtures were held at Th for 2 minutes and then allowed to cool to room temperature again at a rate of 20°C/min. A solid/liquid phase separation and re-crystallisation occurred producing fine approximately spherical partially plasticised particles comprising crystalline zones and amorphous zones containing entrapped solvent. A typical dimension of the particles as determined by scanning electron microscopy is shown in Table 8.

TABLE 8

| Example | Solvent | Tp °C | Th °C | Tm °C | Particle Size $\mu$m |
|---------|---------|-------|-------|-------|----------------------|
| 57 | DMB | 235 | 205 | 150 | 10 to 15 |
| 58 | DEP | 260 | 200 | 155 | 10 to 20 |
| 59 | DBP | 235 | 202 | 175 | 5 to 15 |
| 60 | DPE | 210 | 200 | 153 | 5 to 20 |
| DMP dimethyl phthalate | | | | | |
| DEP diethyl phthalate | | | | | |
| DBP dibutyl phthalate | | | | | |
| DPE diphenyl ether | | | | | |

EXAMPLE 61

PET/Polycarbonate Blend:

Pellets of the PET as used in Examples 1 to 17 were mixed with pellets of a bisphenol A polycarbonate available as "Lexan" 103R from General Electric of the USA. The weight ratio of PET to polycarbonate was 4:1. The mixture was then dispersed in four times its weight of diethyl phthalate and heated to 260°C to cause the pellets to dissolve. The solution obtained was stirred and then allowed to cool to room temperature (20°C) whereupon a blend of PET and polycarbonate separated out.

The cooled mix of separated blend and diethyl phthalate moderate solvent was re-heated to a temperature (about 190°C) at which the blend fully dissolved to give a clear solution. The clear solution was held at this temperature for 2 minutes and then cooled to room temperature without stirring to a cooling rate of 20°C/min whereupon a fine paste of particles was obtained. On dispersion of the paste in methyl ethyl ketone, the particles were found to have a size of 20μm.

The paste was applied to aluminium sheet using the technique of Examples 30 to 33 and then heated in an oven at 260°C for 3 minutes. On cooling to room temperature, the sheet was found to have a smooth coating.

EXAMPLE 62

PBT/Polycarbonte Blend

The procedure of Example 61 was repeated except the PET was replaced by the PBT as used in Examples 18 to 23, the weight ratio of PBT to polycarbonate was 9 to 1 and during the final cooling, the mixture was stirred. A paste of very fine particles was obtained which subsequently produced a smooth coating on aluminium.

It seems probable that as the various polymers separate from the cooling moderate solvent, they imbibe some moderate solvent into their amorphous zones where the solvent becomes at least temporarily entrapped.

A convenient way to perform the heating step of the method of this invention is to feed both polymer and moderate solvent to a closed shearing mixer, preferably an extruder and heating within the mixer to a temperature above $T_m$ to form a solution of polymer in solvent. The solution may be cooled inside or outside the mixer and preferably the solution is extruded from an extruder and the extrudate is cooled to obtain the polymer particles.

## Claims

1. A non-attritive method for making distinct particles of partially crystalline polyester, partially crystalline polycarbonate or partially crystalline polyamide polymers or blends thereof wherein the method comprises

a) heating a mixture comprising a moderate solvent for the polymer and at least 5 wt % of the polymer (the percentage being based on the combined weights of the moderate solvent and the polymer) to a temperature above the melting point ($T_m$) of the polymer when in the mixture and

b) cooling the heated mixture under conditions such that solid/liquid phase separation occurs whereby distinct particles of polymer are produced.

2. A method according to Claim 1 wherein the mixture comprises from 10 to 60 wt % of the polymer or blends of polymers.

3. A method according to Claim 1 or Claim 2 wherein the polymer is a polyester and the moderate solvent is chosen from dimethyl, diethyl or dibutyl phthalate or mixtures thereof.

4. A method according to Claim 1 or Claim 2 wherein the polymer is a polyester and the moderate solvent is a mixture of dimethyl esters of adipic, glutaric and succunic acids which mixture has a boiling point of from 196 to 225°C at 1 bar.

5. A method according to Claim 1 or Claim 2 wherein the polymer is a polyamide and the moderate solvent is chosen from mono, di, tri or tetra ethylene glycol or mixtures thereof.

6. A method according to any one Claims 1 to 5 wherein the mixture is cooled at a rate of less than 300°C/min.

7. A method according to any one of Claims 1 to 6 wherein the mixture is cooled at a rate of 10 to 50°C/min.

8. A method according to any one of Claims 1 to 6 wherein the mixture is cooled at a rate of 100 to 300°C/min.

9. A method according to any one of the preceding Claims wherein the mixture is heated to a temperature of from $T_m$ + 10 to $T_m$ + 60°C.

10. A method according to any one of Claims 1 to 8 wherein the mixture is heated to a temperature above its clearing temperature, $T_{cl}$.

11. A method according to Claim 10 wherein the mixture is head to a temperature of from $T_{cl}$ + 10 to $T_{cl}$ + 30°C.

12. A method according to any one of the preceding Claims wherein the mixture is heated to a holding temperature ($T_h$) which is above $T_m$ and the mixture is held at temperature $T_h$ for from 1 to 30 minutes before cooling occurs.

13. A method according to any one of the preceding Claims wherein the particles obtained are converted to a free flowing condition by removal of the moderate solvent external of the particles.

14. Distinct fine particles of partially crystalline polyester, polycarbonate or polyamide polymer or blends thereof wherein the particles are partially plasticised in that they comprise zones of amorphous polymers containing entrapped moderate solvent.

15. Particles according to Claim 14 wherein the particles comprises from 40 to 75 wt % of entrapped solvent.

16. Particles according to Claim 14 or Claim 15 wherein the particles have a number average maximum diameter of from 0.1 to 100μm.

17. A process for coating a surface with polyester, polycarbonate or polyamide or blends thereof which process comprises
a) providing across the surface a covering of particles of partially crystalline polyester, partially crystalline polycarbonate or partially crystalline polyamide or blends thereof and
b) heating the covering to produce a coherent coating on the surface
wherein the particles are partially plasticised in that they comprise zones of amorphous polymer containing entrapped moderate solvent.

18. A process according to Claim 17 wherein the particles are applied to the surface as a dispersion comprising from 5 to 35 wt % of particles in liquid.

19. A coating composition based on an organic solvent and comprising a binder of a type used in coating compositions which composition contains particles of partially crystalline polyester, polycarbonate or polyamide polymer or blends thereof wherein the particles are partially plasticised in that they comprise zones of amorphous polymer containing entrapped moderate solvent.

20. A process for making porous particles of partially crystalline polyester, polycarbonate or polyamide polymer or blends thereof which particles are partially plasticised in that they comprises zones of amorphous polymer containing entrapped moderate solvent wherein the process comprises
a) immersing the particles in a liquid extractant which is miscible with the moderate solvent but which is not a solvent for the partially crystalline polymer,
b) allowing the extractant to extract the moderate solvent from the particles and
c) washing the extractant from the particles.